# EUROPEAN PATENT SPECIFICATION

(11) **EP 2 352 614 B1**
(45) Date of publication and mention of the grant of the patent: **05.10.2022**
(21) Application number: 09804309.4
(22) Date of filing: 06.11.2009
(51) Int. Cl.: B23K 11/00, B23K 11/11

(54) **METHOD FOR FORMING A METAL MESH**
VERFAHREN ZUR HERSTELLUNG EINES METALLGITTERS
MÉTHODE POUR FORMER UN TREILLIS MÉTALLIQUE

(30) Priority: 07.11.2008 IT UD20080233
(43) Date of publication of application: 10.08.2011
(73) Proprietor: M.E.P. Macchine Elettroniche Piegatrici S.p.A., 33010 Reana del Rojale (IT)
(72) Inventor: TABOGA, Ermanno, I-33030 Buia (IT)
(74) Representative: Petraz, Davide Luigi
(86) International application number: PCT/IB2009/007371
(87) International publication number: WO 2010/052562

(56) References cited:
- GB-A- 1 056 005
- US-A- 3 053 972
- US-A- 5 416 288

## Description

### FIELD OF THE INVENTION

The present invention concerns a method for forming one or more metal meshes, by means of welding. In particular, the invention is applied, preferably but not exclusively, to making electro-welded metal meshes used as reinforcements in reinforced concrete structures. For this reason, in the following description, specific reference will be made to this application, even though the invention can also be used for forming meshes of other types.

### BACKGROUND OF THE INVENTION

Machines for producing electro-welded metal meshes are known, which meshes are made from a plurality of longitudinal metal wires or round pieces, distanced with respect to each other. Corresponding metal transverse wires or round pieces are welded perpendicularly to the longitudinal wires, according to a predefined interaxis.

Such machines generally comprise a welding unit provided with a plurality of welders, at least one for every longitudinal wire, and a unit to feed the transverse wires.

In particular, each welder comprises two electrodes, an upper and a lower one, able to be brought selectively nearer to each other so as to be moved between a first position for feeding the wires to be welded, in which at least one of the two electrodes is moved away from the two wires so as to allow them to be positioned, and a second welding position in which the electrodes are brought into contact with and grip the two wires in correspondence with one of their join sections. In the second position the two electrodes close the electric circuit, thus welding the two wires.

The functioning of such machines provides that a transverse wire, in some cases several transverse wires at the same time, is fed and disposed in an attachment position in which it is welded to the longitudinal wires by means of a relative welding unit.

Subsequently, the longitudinal wires are simultaneously made to move forward by a pitch equivalent to the interaxis according to specifications between the transverse wires, so that a new transverse wire can be fed and disposed in the attachment position.

There is an ever-growing need to make production lots of metal meshes having different pitches, and therefore it may be required, even during the course of the same day, to re-equip the machine in order to modify the pitch between the longitudinal wires.

To vary the pitch, so as to obtain a greater diversification of the types of mesh that can be made, the welders having a distance equal to the pitch required are electrically connected in pairs to each other by means of electric bridges. In this way, when the electrodes of each of said pairs are in the welding position, a closed electric circuit which allows the passage of the current needed for welding is formed for each of them. The pitch is therefore made either by means of a single welder, that is, a pair of an upper and a lower electrode, or by means of a plurality of welded pairs connected to each other for the passage of the current.

One disadvantage of the known machine is that this variation in pitch between the longitudinal wires entails complex and laborious operations to equip and calibrate the machines, which are typically carried out manually and mainly derive from the need to disconnect the pre-existing electric bridges and make new electric bridges, depending on the new pitch required for the longitudinal wires. This inevitably increases the times required for setting the machine, proportionally to the frequency with which this operation to modify the pitch has to be performed.

Document US-A-3.053.972 describes a feeding system for electrodes of the three-phase type, in which two upper electrodes are connected to two distinct phases of the three-phase system, while the third phase feeds a copper bar which acts as a lower electrode. Document GB-A-1.056.005, which forms the basis for the preamble of claim 1, also shows a three-phase feeding system in which pairs of electrodes are fed in distinct phases of the three-phase system, but no indication is provided for the possibility of modifying the pitch of the mesh, that is, of varying the activation of at least some of the electrodes, thus guaranteeing that a balanced electric feed is maintained in any case. Document US-A-5.416.288 also discloses a feeding system with a three-phase feed and a welding transformer for each contact electrode pair.

Purpose of the present invention is to obtain a method for forming a metal mesh which does not need complex and laborious operations of equipping and calibrating the machine, and allows to make meshes substantially of any shape and size quickly, easily and substantially automatically, considerably reducing the setting times.

In particular, purpose of the invention is to reduce drastically the re-equipping times of the machine in the steps of modifying the pitch between the longitudinal wires, thus eliminating in practice the need to intervene with operations to assemble/disassemble mechanical parts in order to make the electric connection between specific welding units activated, and in any case keeping the electric feed perfectly balanced.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with said purposes, a machine is used, advantageously but not exclusively, to make a metal mesh of the electro-welded type comprising longitudinal and transverse wires.

The machine comprises a plurality of welding units, each consisting of a pair of electrodes, by means of which the longitudinal wires are attached by welding, with a pre-defined or pre-definable pitch, to corresponding transverse wires of the metal mesh.

The two electrodes, respectively upper and lower, of each pair are selectively and reciprocally movable between a first distanced position in order to feed the wires to be welded, in which at least one of the electrodes is distant from the two wires to be welded, and a second welding position in which both the electrodes contact and weld the two wires by means of the passage of current.

In the following description, for the sake of simplicity, reference will be made to the case in which the lower electrodes are fixed in a welding position in contact with the wires to be welded, while the upper electrodes are selectively movable from said distanced position, not in contact with the wires to be welded, to the welding position.

It obviously comes within the scope of the present invention that the upper electrodes are fixed and the lower electrodes are movable, or also that both electrodes are movable to be reciprocally closer/distanced with respect to each other.

The upper and lower electrodes are disposed in pairs respectively facing each other, and longitudinally distanced according to a regular interaxis equal to the minimum pitch of the mesh to be obtained.

The welding unit is electrically fed by a three-phase system, in which at least the lower electrodes of the welders are each individually connected to a specific phase of the three-phase system.

According to the invention, the feed configuration of the lower electrodes is such that, as the required pitch of the mesh varies, and therefore that of the upper electrodes activated and brought into contact with the wires to be welded, the electric circuit between the upper electrode, the wires to be welded and the lower electrode of a triad of lower electrodes longitudinally adjacent is closed in such a manner that all three phases of the three-phase system to which the lower electrodes are connected are present, so as to guarantee a balanced electric feed.

In other words, the upper electrode involved in the welding, even as the pitch varies, always forms with another two adjacent upper electrodes and with the relative and corresponding lower electrodes, sequential triads in which all three phases of the three-phase system of electric feed are present.

In this way, as the pitch required by the mesh varies, it is not necessary to carry out any operation to mechanically re-configure the welding elements, but it is enough to selectively activate the upper electrodes involved, that is, to lower them onto the wires to be welded, thus always maintaining a balanced electric feed condition, and therefore optimal welding conditions.

According to one formulation of the present invention, the connection of the lower and upper electrodes follows a configuration of the star type of the three-phase system.

According to another variant, the upper electrodes of the welders are all connected to the centre of said star, and the star is in any case formed by triads that vary as the electrodes involved vary, depending on the desired pitch of the mesh to be made.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of a welding machine in a first operating condition;

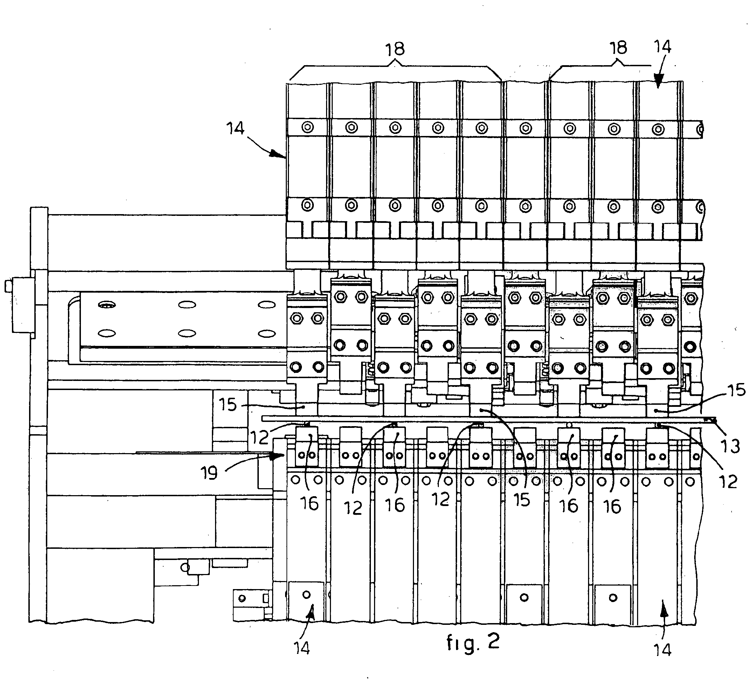

- fig. 2 is a detail of fig. 1;
- fig. 3 is a front view of the machine in fig. 1 in a second operating condition; and
- fig. 4 is a front view of the machine in fig. 1 in a third operating condition;
- figs. 5a, 5b, 5c and 5d schematically show different configurations of use of the machine, respectively with the upper electrodes raised to feed the wires to be welded, with all the upper electrodes lowered to obtain the mesh with minimum pitch, an embodiment that is not part of the present invention, and with some of the upper electrodes lowered to obtain, respectively, a double pitch (fig. 5c) and triple pitch (fig. 5d) of the minimum pitch.

### DETAILED DESCRIPTION OF A PREFERENTIAL FORM OF EMBODIMENT

With reference to the attached drawings, number 10 indicates in its entirety a machine for forming electro-welded meshes.

In this case, the electro-welded meshes formed with the machine 10 comprise a plurality of longitudinal metal wires 12 distanced from each other and welded to corresponding transverse metal wires 13, also distanced by a pre-defined interaxis.

The machine 10 substantially comprises a frame 11 and at least a welding unit 17, mounted on the frame 11. In this case a welding unit 17 is shown comprising a plurality of welders 14, one adjacent to the other. The welders 14 can also be moved in a direction substantially parallel to the direction of feed of the transverse wires 13. The machine 10 also comprises a longitudinal feed unit and a transverse feed unit, not shown, respectively able to feed the longitudinal wires 12 and the transverse wires 13, to dispose them in cooperation with the welders 14.

Each welder 14 is disposed in correspondence with the join zone between the respective longitudinal wire 12 and the relative transverse wire 13, and comprises a first upper electrode 15 and a second lower electrode 16. The electrodes 15, 16, electrically fed, allow to close, as will be described more fully hereafter, an electric circuit and therefore the passage of a current in correspondence with the wires 12 and 13, thus determining the welding thereof.

Each upper electrode 15 is selectively movable vertically in the direction of the second electrode 16, which is fixed, and the transverse wire 13 and the longitudinal wire 12 are able to be positioned on the latter in their join position.

As we said before, the invention is also applied in the case where the upper electrode 15 is fixed and the lower electrode 16 is selectively movable.

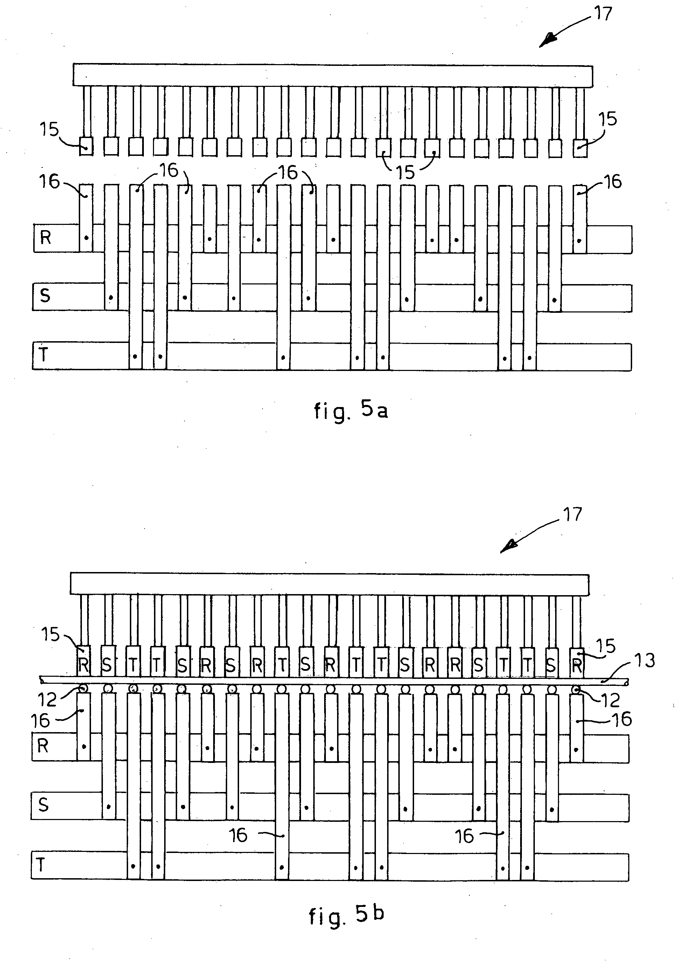

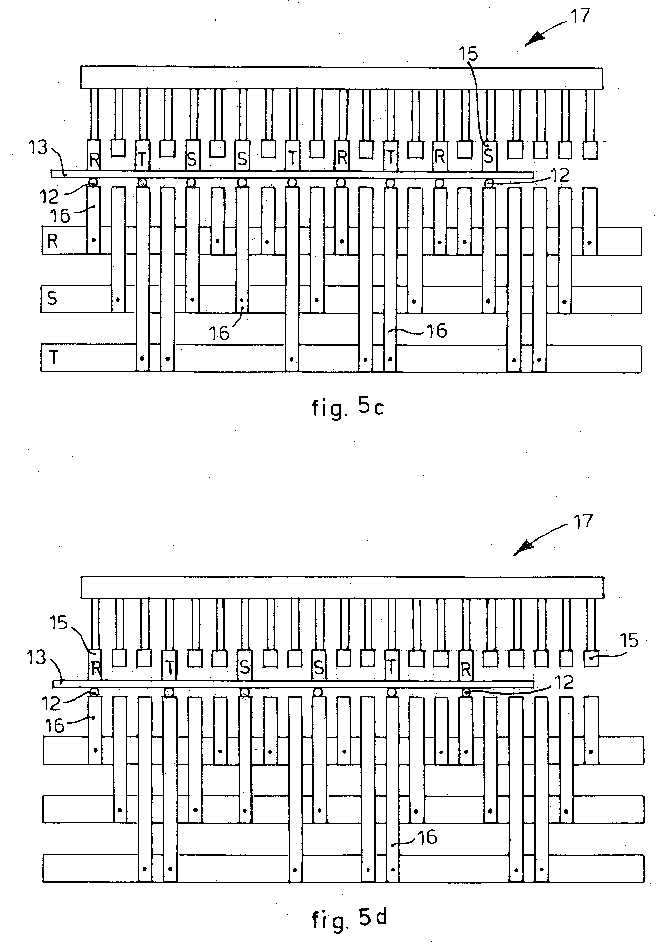

In particular, the first electrode 15 is selectively movable between a first feed position (see for example the position of the upper electrodes in fig. 5a), in which it is raised and distanced from the second electrode 16 and allows the free feed both of the transverse wire 13 and also of the longitudinal wire 12, and a second welding position, in which it is near to the second electrode 16 and with the latter contacts the two wires 12 and 13 (see figs. 5b, 5c and 5d discussed in detail hereafter).

The welding unit 17 is fed electrically by means of a three-phase system in the known star type configuration, in which all the upper electrodes 15 of the welders 14 are connected to the star's centre and the lower electrodes 16 of the welders 14 are connected to different phases, indicated in the drawings with the letters R, S, T of the three-phase system.

As can be seen better in figs. 5a-d, each lower electrode 16 is connected to a respective phase R, S, T of the three-phase feed system.

The welders 14 of each triad 18 are distanced longitudinally with respect to each other by a quantity equal to the minimum pitch desired between the longitudinal wires 12.

In particular, as can be seen for example in fig. 5b, when all the upper electrodes 15 are activated, an embodiment that is not part of the present invention, that is lowered on the wires 12, 13 to be welded, the minimum pitch of the metal mesh is obtained, which can correspond, for example, to 50 mm.

The machine 10 can however assume different operating conditions, each corresponding to the production of meshes having different pitches between the longitudinal wires 12 and the transverse wires 13. As can be seen from the drawings, in each of said operating conditions, corresponding in the case of fig. 5c to the double pitch with respect to that of fig. 5b, and in the case of fig. 5d to a triple pitch, the lower electrodes 16 of the welders 14 continue to form triads of adjacent electrodes, in relation to the respective upper electrodes 15 activated, which comprise all the three phases R, S, T (even if not in the same order), thus ensuring the closure of the circuit in balanced feed conditions.

As can be seen starting from fig. 5b, in which all the upper electrodes 15 are activated in closing the respective electric circuits, the first three lower electrodes 16 form in sequence a triad R, S, T, the second three electrodes form a triad T, S, R, the third three electrodes 16 form a triad S, R, T, and so on, that is, adjacent triads of lower electrodes 16 always and in every case comprise all the phases of a triad.

Looking at the situation in fig. 5c, in which the upper electrodes 15 are activated alternately in order to double the pitch, the first three lower electrodes 16 form the triad R, T, S, the second three lower electrodes 16 form the triad S, T, R, the third form the triad T, R, S, and so on.

Finally, in fig. 5d, in which an upper electrode 15 of every three is activated in order to triple the pitch, the triads R, T, S; S, T, R and so on are formed.

In this way, as the chosen pitch varies, each triad 18 of adjacent lower electrodes 16, associated with the upper electrodes 15 activated, always comprises all the three phases R, S, and T.

In particular the machine 10 as described heretofore functions as follows according to the present invention

Once the desired pitch between the longitudinal wires 12 has been selected, starting from the end 19 of the mesh to be made, the upper electrodes 15 are moved into a welding position having a reciprocal distance equal to said pitch.

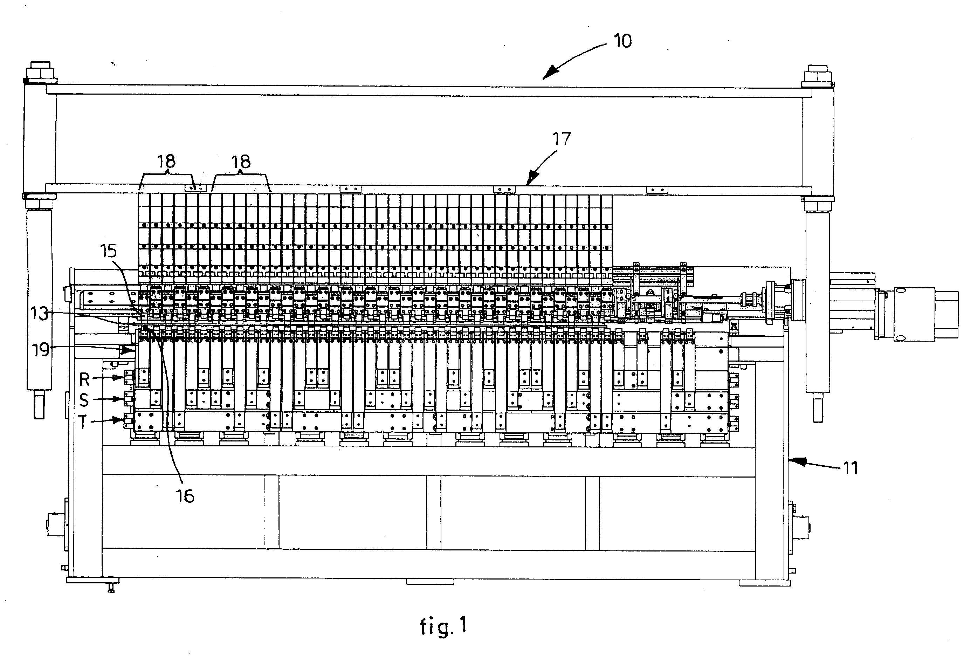

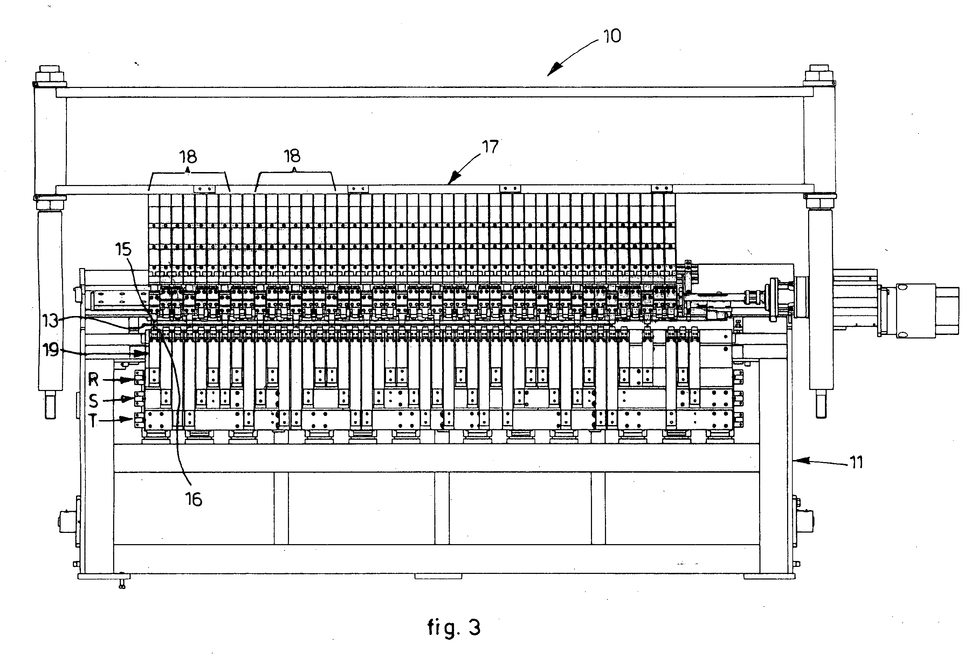

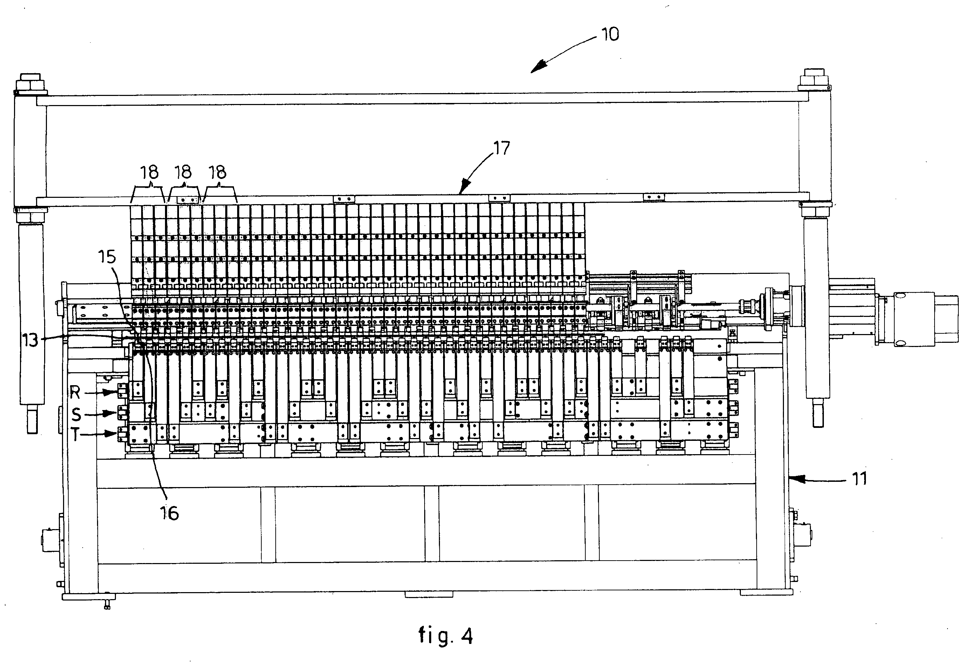

Thus the triads 18 of welders 14 are formed, contiguous (fig. 4) or not contiguous (figs. 1, 3) in which each lower electrode 16 of each welder 14 of said triads 18 is connected to a different phase R, S, T of the three-phase system.

In this welding position, the upper electrodes 15 of the triads 18 are electrically connected to the respective lower electrodes 16. Therefore the upper electrodes 15 of said triads 18 are in short circuit with the respective lower electrodes 16. This corresponds to short circuit each phase of the three phase system with the star centre. The three-phase system of each triad 18 is therefore short circuited. Consequently, for each of said triads 18, a closed circuit is formed through which the current needed to weld the wires 12, 13 flows.

It is clear that modifications and/or additions of parts may be made to the machine for forming a metal mesh as described heretofore, without departing from the field and scope of the present invention as defined by the appended claims.

For example, it comes within the scope of the present invention to provide to use two welding units 17 for each machine 10, disposed in a specular manner with respect to each other in order to make at least two metal meshes in parallel. This solution therefore provides to use two star type configurations of the three-phase system disposed parallel with respect to each other.

It is also clear that, although in the course of the description specific reference was made to a three-phase system, the present invention also refers to systems having phases with a different number, other than three.

## Claims

1. Method for forming at least a metal mesh consisting of longitudinal wires (12) and transverse wires (13), by means of at least a welding unit (17) provided with a plurality of welders (14), each of said welders (14) comprising two electrodes (15, 16), of which at least one is selectively movable between a first distanced position, to feed the wires to be welded, and a second welding position in which both the electrodes (15, 16) contact and weld said wires (12, 13) to each other, wherein it provides:
- to supply electric feed of the three-phase type to the electrodes (15, 16), in which the lower electrodes (16) or the upper electrodes (15) are each connected to a specific phase (R, S, T) of the three-phase system;
**characterized in that** the method further provides
- to selectively move only some of the upper (15) or lower (16) electrodes, according to the welding pitch to be obtained, so that the electric circuit between the lower electrode (16), the wires to be welded (12, 13) and upper electrode (15) of a triad (18) of longitudinally adjacent electrodes (15, 16) is closed in such a manner that all three phases (R, S, T) of the three-phase system are always present.

2. Method as in claim 1, **characterized in that** it provides to connect the lower and upper electrodes (16, 15) according to a star type configuration of said three-phase system.

3. Method as in claim 2, **characterized in that** in the case where the lower electrodes (16) are respectively connected to the phases (R, S, T) of the three-phase system, the upper electrodes (15) are connected to the center of said star.

4. Method as in any claim hereinbefore, **characterized in that** the lower electrodes (16) are fixed and the upper electrodes (15) are selectively movable.

5. Method as in any claim from 1 to 3, **characterized in that** the upper electrodes (15) are fixed and the lower electrodes (16) are selectively movable.

## Patentansprüche

1. Verfahren zum Bilden wenigstens eines Metallnetzes, das aus Längsdrähten (12) und Querdrähten (13) besteht, mittels wenigstens einer Schweißeinheit (17), die mit einer Mehrzahl von Schweißern (14) ausgestattet ist, wobei jeder der Schweißer (14) zwei Elektroden (15, 16) aufweist, von denen wenigstens eine selektiv bewegbar ist zwischen einer ersten im-Abstand-Position, um die zu verschweißenden Drähte zuzuführen, und einer zweiten Schweiß-Position, in welcher die beiden Elektroden (15, 16) die Drähte (12, 13) kontaktieren und miteinander verschweißen, wobei es bereitstellt:
- elektrischen Strom vom Drei-Phasen-Typ an die Elektroden (15, 16) zuzuführen, wobei die unteren Elektroden (16) oder die oberen Elektroden (15) jeweils mit einer spezifischen Phase (R, S, T) des Drei-Phasen-Systems verbunden sind,
**dadurch gekennzeichnet, dass** das Verfahren ferner bereitstellt
- selektiv nur einige der oberen (15) oder unteren (16) Elektroden zu bewegen gemäß der zu erzielenden Schweißteilung, so dass der elektrische Kreis zwischen der unteren Elektrode (16), den zu verschweißenden Drähten (12, 13) und der oberen Elektrode (15) einer Dreiergruppe (18) aus längs benachbarten Elektroden (15, 16) in einer solchen Weise geschlossen ist, dass alle drei Phasen (R, S, T) des Drei-Phasen-Systems immer präsent sind.

2. Verfahren gemäß Anspruch 1, **dadurch gekennzeichnet, dass** es bereitstellt, die unteren und oberen Elektroden (16, 15) gemäß einer Sternentyp-Konfiguration des Drei-Phasen-Systems zu verbinden.

3. Verfahren gemäß Anspruch 2, **dadurch gekennzeichnet, dass** in dem Falle, in dem die unteren Elektroden (16) jeweils mit den Phasen (R, S, T) des Drei-Phasen-Systems verbunden sind, die oberen Elektroden (15) mit dem Zentrum des Sterns verbunden sind.

4. Verfahren gemäß irgendeinem vorigen Anspruch, **dadurch gekennzeichnet, dass** die unteren Elektroden (16) fixiert sind und die oberen Elektroden (15) selektiv bewegbar sind.

5. Verfahren gemäß irgendeinem Anspruch von 1 bis 3, **dadurch gekennzeichnet, dass** die oberen Elektroden (15) fixiert sind und die unteren Elektroden (16) selektiv bewegbar sind.

## Revendications

1. Procédé pour former au moins un treillis métallique constitué de fils longitudinaux (12) et de fils transversaux (13), au moyen d'au moins une unité de soudage (17) pourvue d'une pluralité de têtes de soudage (14), chacune desdites têtes de soudage (14) comprenant deux électrodes (15, 16), dont au moins une est sélectivement mobile entre une première position espacée, pour alimenter les fils devant être soudés, et une seconde position de soudage dans laquelle les deux électrodes (15, 16) viennent en contact avec et soudent lesdits fils (12, 13) l'une à l'autre, comprenant l'étape consistant à :
- fournir une alimentation électrique du type triphasé aux électrodes (15, 16), les électrodes inférieures (16) ou les électrodes supérieures (15) étant reliées chacune à une phase spécifique (R, S, T) du système triphasé ;
**caractérisé en ce que** le procédé comprend en outre l'étape consistant à
- déplacer sélectivement uniquement une partie des électrodes supérieures (15) ou inférieures (16), selon le pas de soudage devant être obtenu, de sorte que le circuit électrique entre l'électrode inférieure (16), les fils devant être soudés (12, 13) et l'électrode supérieure (15) d'une triade (18) d'électrodes longitudinalement adjacentes (15, 16) soit fermé de telle sorte que la totalité des trois phases (R, S, T) du système de type triphasé soient toujours présentes.

2. Procédé selon la revendication 1, **caractérisé en ce qu'**il comprend l'étape consistant à connecter les électrodes inférieures et supérieures (16, 15) selon une configuration de type étoile dudit système triphasé.

3. Procédé selon la revendication 2, **caractérisé en ce que** dans le cas où les électrodes inférieures (16) sont connectées respectivement aux phases (R, S, T) du système triphasé, les électrodes supérieures (15) sont connectées au centre de ladite étoile.

4. Procédé selon l'une quelconque des revendications précédentes, **caractérisé en ce que** les électrodes inférieures (16) sont fixes et les électrodes supérieures (15) sont mobiles de manière sélective.

5. Procédé selon l'une quelconque des revendications 1 à 3, **caractérisé en ce que** les électrodes supérieures (15) sont fixes et les électrodes inférieures (16) sont mobiles de manière sélective.
